# EUROPÄISCHE PATENTSCHRIFT

(11) **EP 1 683 624 B1**
(45) Veröffentlichungstag und Bekanntmachung des Hinweises auf die Patenterteilung: **10.10.2012**
(21) Anmeldenummer: 06090005.7
(22) Anmeldetag: 12.01.2006
(51) Int. Cl.: B29C 47/90

(54) **Stufenlos einstellbare Kalibrierhülse für extrudierte Kunststoffrohre**
Continuously adjustable calibrating sleeve for extruded plastic pipes
Manchon de calibrage réglable en continu destiné à des tuyaux en plastique

(30) Priorität: 20.01.2005 DE 102005002820
(43) Veröffentlichungstag der Anmeldung: 26.07.2006
(73) Patentinhaber: INOEX GmbH, 32547 Bad Oeynhausen (DE)
(72) Erfinder: Schmuhl, Jörg, 15711 Königs Wusterhausen (DE); Klose, Reinhard, 31737 Rinteln (DE)
(74) Vertreter: Seewald, Jürgen

(56) Entgegenhaltungen:
- WO-A1-2004/091891
- US-A- 2 981 975

## Beschreibung

Die vorliegende Erfindung betrifft eine stufenlos einstellbare Kalibrierhülse für extrudierte Kunststoffrohre mit einem Einlaufkopf und einem sich daran anschließenden das Kunststoffrohr umfassenden und stützenden und in seiner lichten Weite änderbaren Bauteil.

Aus dem Stand der Technik sind Kalibrierhülsen bekannt, deren Innendurchmesser im laufenden Betrieb in engen Grenzen veränderbar ist. Diese Änderung des Innendurchmessers der Kalibrierhülse dient dazu, Kunststoffrohre unter Berücksichtigung der von verschiedenen Faktoren abhängenden Schrumpfung des Kunststoffes innerhalb der geforderten Toleranzgrenzen herzustellen. Beispiele für derartige Kalibrierhülsen sind in DE 44 08 064 C1, DE-OS 26 16 197, DE 200 00 872 U1, DE 200 23 052 U1, EP 1 157 805 A1 sowie US 2981975 zu finden.

In der DE 198 43 340 C2 ist eine Kalibrierhülse beschrieben, deren Innendurchmesser im laufenden Betrieb auf Kunststoffrohre unterschiedlicher Außendurchmesser einstellbar ist. Damit wird der Tatsache Rechnung getragen, dass unter den heutigen Produktionsbedingungen die Auftragslose immer kleiner werden, d. h., die Extrusionsanlagen ständig umgestellt werden müssen. Diese Umstellungen verursachen Stillstandzeiten der Extrusionsanlage, einen hohen Arbeitsaufwand beim Wechseln der einzelnen Ausrüstungsteile sowie Verluste an Kunststoffmaterial. Die Kalibrierhülse gemäß DE 198 43 340 C2 weist eine Vielzahl von in ihrer Längsachse angeordneten Lamellenkränzen auf, wobei die einzelnen Lamellen jedes Kranzes radial verstellbar sind und sich von Radialebene zu Radialebene überlappen und in den Überlappungsbereichen eng aneinander liegen. Dadurch wird ein im Wesentlichen hohlzylindrischer Rohrkörper geschaffen, der ein extrudiertes Kunststoffrohr auf der Außenseite abstützt und in seinem Durchmesser, in Anpassung an den zu fahrenden Rohrdurchmesser verstellbar ist. Diese bekannte Kalibrierhülse ist relativ aufwendig aufgebaut. Außerdem lassen sich mit dieser Kalibrierhülse keine exakten kreisförmigen Querschnitt der Kunststoffrohre erzeugen.

In der WO 2004/091891 A1 ist ebenfalls eine Kalibrierhülse beschrieben, die im laufenden Betrieb auf unterschiedliche Außendurchmesser von herzustellenden Kunststoffrohren verstellbar ist. Diese Kalibrierhülse besitzt einen Einlaufkopf, an dem zwei Lagen von flexiblen Bändern befestigt sind. Diese Bänder kreuzen sich nach Art eines Scherengitters und sind an ihren Kreuzungspunkten gelenkig miteinander verbunden. Der für die Kalibrierung der extrudierten Kunststoffrohre wesentliche Innendurchmesser der Kalibrierhülse wird durch Auseinanderziehen bzw. Zusammendrücken des Scherengitters verändert. Diese Kalibrierhülse zeichnet sich durch einen großen Stellbereich bei hoher Eigensteifigkeit aus. Des weiteren garantiert die Vielzahl der sich kreuzenden, miteinander gelenkig verbundenen Bänder eine absolut kreisrunde Form der Kalibrierhülse bei jedem eingestellten Durchmesser.

Aufgabe der vorliegenden Erfindung ist es, eine Kalibrierhülse zur Verfügung zu stellen, die im Vergleich mit den bekannten Kalibrierhülsen einfach aufgebaut ist, aber dennoch am Einlaufkopf eine effektive Abdichtung des Vakuumtanks gegenüber der Umgebung gewährleistet, Stauchungen des einlaufenden, extrudierten Kunststoffrohres vermeidet und bei jedem eingestellten Durchmesser eine absolut kreisrunde Form besitzt.

Diese Aufgabe wird erfindungsgemäß mit einer Kalibrierhülse gelöst, die die Merkmale des Anspruchs 1 aufweist.

Die im Einlaufkopf der Kalibrierhülse vorgesehenen, radial verstellbaren Segmente gestatten eine exakte Einstellung des Einlaufs auf den zu kalibrierenden Rohrdurchmesser, d. h., die Segmente und die beiden Bänderlagen werden koordiniert und gleichzeitig auf den zu kalibrierenden Durchmesser eingestellt. Stauchungen des extrudierten Kunststoffrohres im Einlaufbereich der Kalibrierhülse werden damit verhindert. Das hat positive Auswirkungen auf die Oberflächengüte der produzierten Kunststoffrohre. Die zur Anlage an das zu kalibrierende Kunststoffrohr ausgebildeten Stirnseiten der Segmente gewährleisten durch einen umlaufenden Kontakt mit dem Kunststoffrohr die Abdichtung des Vakuumtanks gegenüber der Umgebung. Geringfügige Unrundheiten zwischen der durch die Stirnseiten der Segmente gebildeten Umfangsfläche und dem extrudierten Kunststoffrohr werden durch die an dieser Stelle des Produktionsganges noch formbare Masse des Kunststoffrohres kompensiert. Durch das verzahnende Ineinandergreifen benachbarter Segmente in ihrem geschlitzten Überlappungsbereich wird eine Art Labyrinthdichtung geschaffen, die die Abdichtung des Vakuumtanks zur Umgebung verbessert.

In vorteilhafter Ausgestaltung der Erfindung münden in die Schlitze Druckwasserauslässe. Dadurch ist eine intensive Kühlung des Einlaufs sowie die Ausbildung eines Schmierfilms zur Gleitkühlung des extrudierten Kunststoffrohres gewährleistet. Außerdem verbessert der sich in den Schlitzen ausbildende Wasserfilm die Abdichtung weiter.

Dadurch, dass die Wasserauslässe nur in den in Extrusionsrichtung hinten liegenden Schlitzen vorgesehen sind, wird das aus ihnen austretende Wasser in den Vakuumtank eingesaugt, wodurch ein Austreten des Wassers nach außen vermieden wird.

Weitere vorteilhafte Ausgestaltungen der Erfindung ergeben sich aus den übrigen Unteransprüchen.

Die Erfindung wird nachstehend anhand eines Ausführungsbeispiels näher erläutert. In der dazugehörigen Zeichnung zeigt:
- Fig. 1: eine Extrusionsanlage zur Herstellung von Kunststoffrohren mit ihren Hauptkomponenten in schematischer Darstellung,

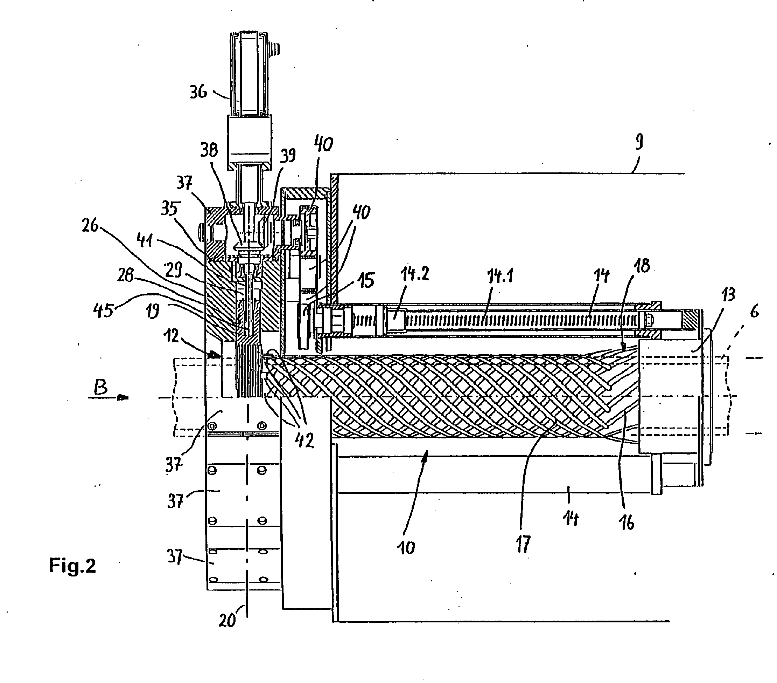

- Fig. 2: einen vergrößerten Ausschnitt A gemäß Figur 1 in teilweise geschnittener Darstellung,
- Fig. 3: einen Blick in Richtung des Pfeils B gemäß Figur 2 auf das Gehäuse des Einlaufkopfes der Kalibrierhülse,
- Fig. 4: einen Schnitt A-A durch ein Segment gemäß Fig. 5,
- Fig. 5: einen Schnitt B-B durch ein Segment gemäß Fig. 4,
- Fig. 6: eine Seitenansicht eines Segments mit der Befestigungsstelle für die Bänderlagen der Kalibrierhülse, und
- Fig. 7: eine Druntersicht der Darstellung gemäß Figur 6.

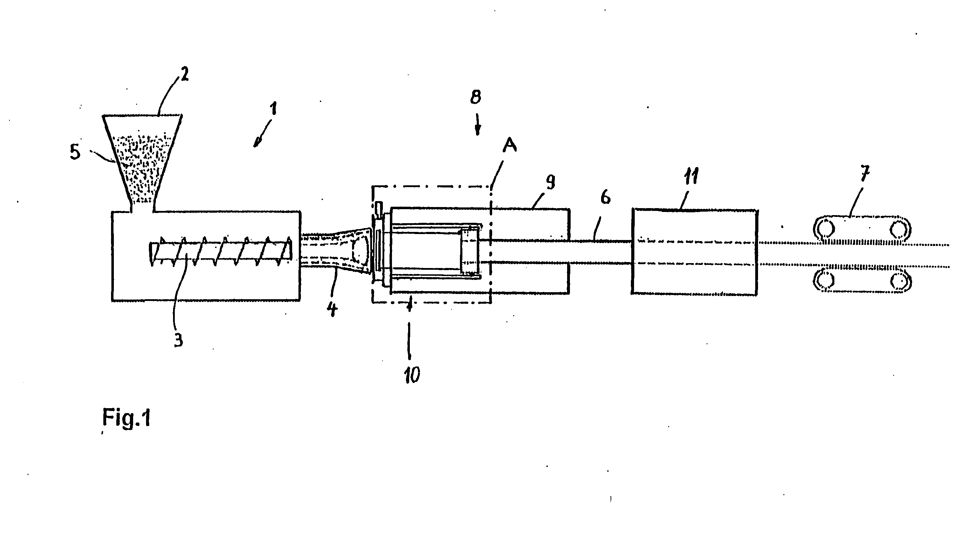

Die in Figur 1 dargestellte Extrusionsanlage umfasst eine Extrudereinheit 1 mit einem Aufgabetrichter 2, einer Extruderschnecke 3 und einem Extrusionswerkzeug 4. Über den Aufgabetrichter 2 wird ein thermoplastischer Kunststoff 5 in Granulat- oder Pulverform der Extrudereinheit 1 zugeführt. In der Extrudereinheit 1 wird das Granulat bzw. Pulver erwärmt, geknetet und plastifiziert. Anschließend wird der Kunststoff als formbare Masse durch die Extruderschnecke 3 in das Extrusionswerkzeug 4 gefördert und dort durch einen ringförmigen Durchtrittsspalt gedrückt.

Nach dem Austritt aus dem Extrusionswerkzeug 4 wird der heiße, noch verformbare Rohr 6 mittels einer am Ende der Extrusionslinie angeordneten Abzugseinheit 7 durch eine Kalibrier- und Kühleinheit 8 gezogen, die einen Vakuumtank 9 mit einer an dessen Eingang angeordneten, perforierten Kalibrierhülse 10 aufweist. Die Kalibrierhülse 10 ist stufenlos im Durchmesser einstellbar, so dass das extrudierte, noch formbare Rohr 6 auf den gewünschten Wert fixiert werden kann. Nach dem Verlassen der Kalibrier- und Kühleinheit 8 tritt das Rohr 6 in eine Kühlstrecke 11 ein, in der es auf Raumtemperatur abgekühlt wird.

Der Aufbau der Kalibrierhülse 10 wird nachstehend näher beschrieben.

Die Kalibrierhülse 10 besitzt einen ringförmigen Einlaufkopf 12 und einen ringförmigen Auslasskopf 13. Während der Einlaufkopf 12 außerhalb des Vakuumtanks 9 angeordnet ist, befindet sich der Auslasskopf 13 im Vakuumtank 9. Der Auslasskopf 13 hat einen fixen Innendurchmesser, der mindestens dem größten in der Extrusionsanlage zu fahrenden Rohrdurchmesser entspricht. Er ist gegenüber dem ortsfesten Einlaufkopf 12 in Axialrichtung der Kalibrierhülse 10 verlagerbar. Dazu sind mindestens zwei Spindeleinheiten 14 vorgesehen, deren Gewindespindeln 14.1 über einen nicht dargestellten Motor und einen Zahnriemen 15 angetrieben werden. Der Auslasskopf 13 ist mit den Spindelnmuttern 14.2 verbunden. Je nach Antriebsrichtung der Gewindespindeln 14.1 bewegt sich der Auslasskopf 13 entweder vom Einlasskopf 12 weg bzw. auf diesen zu.

Zwischen dem Einlaufkopf 12 und dem Auslaufkopf 13 sind zwei Bänderlagen 16, 17 angeordnet, die sich nach Art eines Scherengitters kreuzen und an den Kreuzungspunkten gelenkig miteinander verbunden sind. Die beiden Bänderlagen 16, 17 bilden zusammen einen perforierten Hohlzylinder. Während an den Auslasskopf 13 nur die Bänder der Lage 16 gelenkig angeschlagen sind, sind an den Einlaufkopf 12 in noch näher zu beschreibender Weise beide Bänderlagen 16, 17 gelenkig befestigt. Der Durchmesser des durch die Bänderlagen 16, 17 gebildeten Hohlzylinders ist veränderbar, indem der Auslaufkopf 13 über die Spindeleinheiten 14 axial verstellt wird. Durch Verstellung des Auslaufkopfes 13 zum Einlaufkopf 12 hin wird der Durchmesser vergrößert, durch Verlagerung des Auslaufkopfes 13 vom Einlaufkopf 12 weg verringert sich der Durchmesser des Hohlzylinders. Je nach dessen Auszugsgrad ergibt sich am Übergang zum Auslasskopf 13 ein mehr oder weniger konischer Übergang 18. Ein derartiger konischer Übergang soll und wird am Einlasskopf 12 durch dessen, nachstehend näher beschriebene Ausführung vermieden.

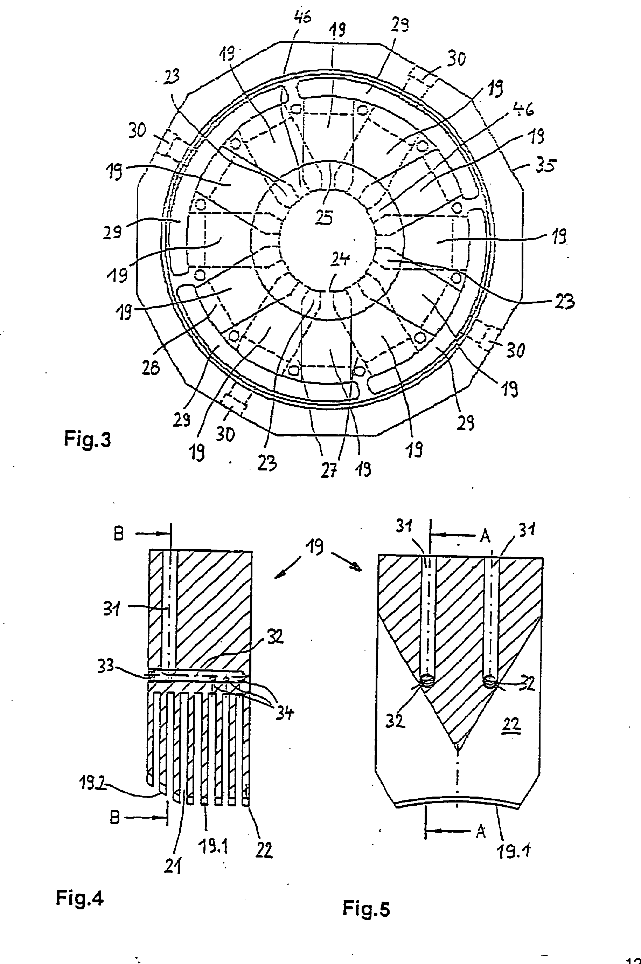

Der Einlaufkopf 12 weist zwölf radial verstellbare Segmente 19 auf, die in einer Radialebene 20 gleichmäßig auf den Umfang eines zu kalibrierenden Rohrs 6 verteilt angeordnete sind. Die Segmente 19 überlappen sich in ihren unteren Bereichen, wie aus Fig. 3 hervorgeht, in der die Überlappungsbereiche mit dem Bezugszeichen 23 versehen sind. In diesen Überlappungsbereichen 23 sind die Segmente 19 mit Schlitzen 21, die jeweils von Stegen 22 begrenzt sind, versehen, wie am besten aus Fig. 4 ersichtlich ist. Die Schlitze 21 und Stege 22 benachbarter Segmente 19 greifen in den Überlappungsbereichen 23 verzahnend ineinander, wobei die Segmente 19, um in der Radialebene 20 zu bleiben, alternierend um einen Schlitz 21 bzw. Steg 22 in Extrusionsrichtung bzw. entgegen der Extrusionsrichtung zueinander versetzt sind.

Wie aus Fig. 4 hervorgeht, bilden die drei vorderen Stege 22 jedes Segments 19 eine Einlaufschräge 19.2, die das Einlaufen eines extrudierten Rohres 6 in den Einlaufkopf 12 begünstigen soll.

Die Segmente 19 sind in den Grenzen einer inneren Kreislinie 24 und einer äußeren Kreislinie 25 (Fig. 3) radial verstellbar. Dabei steht die innere Kreislinie 24 für den kleinsten zu kalibrierenden Durchmesser eines Rohres 6 und die äußere Kreislinie 25 für den größten Durchmesser eines zu kalibrierenden Rohres 6. Die Stirnseiten 19.1 der Segmente 19 weisen einen Radius auf, der dem größten mit der jeweiligen Kalibrierhülse 10 herstellbaren Durchmesser eines Rohres 6 entspricht.

Die Segmente 19 sind in einem Gehäuse 26 gelagert, das seitliche Führungen 27 (Fig.3) für die Segmente 19 aufweist. Die Führungsschächte 28 der Segmente 19 in dem Gehäuse 26 münden direkt in Wasserkammern 29, die über Zuleitungen 30 mit Druckwasser versorgt werden. Dabei ist jeweils einer Gruppe von drei Segmenten 19 eine separate Wasserkammer 29 zugeordnet. Jedes Segment 19 besitzt zwei radiale Kanäle 31, deren äußeren Enden mit einer zugeordneten Wasserkammer 29 kommunizieren und deren inneren Enden jeweils in einen axialen Stichkanal 32 münden, der in Extrusionsrichtung als Sackloch endet und dessen entgegengesetztes, nach außen mündendes Ende durch einen Stopfen 33 verschlossen ist. Von den Stichkanälen 32 führen Wasserauslässe 34 in die in Extrusionsrichtung gesehen hinteren drei Schlitze 21.

Die stufenlose, radiale Verstellung der Segmente 19 erfolgt über einen Elektromotor 36, der an ein Getriebegehäuse 37 angeflanscht ist. Das Getriebegehäuse 37 seinerseits ist auf einer von zwölf Polygonalflächen 35 des Gehäuses 26 des Einlaufkopfes 12 befestigt (Fig.3). Jeder der zwölf Polygonalflächen 35 ist ein derartiger Getriebekasten 37 zugeordnet (in Fig. 3 sind die Getriebekästen 37 weggelassen worden), wobei nur einer der Getriebekästen 37 durch den Motor 36 direkt angetrieben wird. Der Antrieb der Getriebe der anderen Getriebekästen 37 erfolgt über miteinander kämmende Stirnräder 38, 39 und auf gleicher Welle wie die Stirnräder 39 sitzende, miteinander kämmende Zahnräder 40, die die Stirnräder 39 der anderen Getriebekästen 37 antreiben. In jedem Getriebekasten 37 sitzen die Stirnräder 38 drehfest auf einer Gewindespindel 41, die in ein Gewinde 45 der Segmente 19 eingedreht ist. Je nach Drehrichtung der angetriebenen Stirnräder 38 bewegen sich die Segmente 19 entweder einwärts oder auswärts.

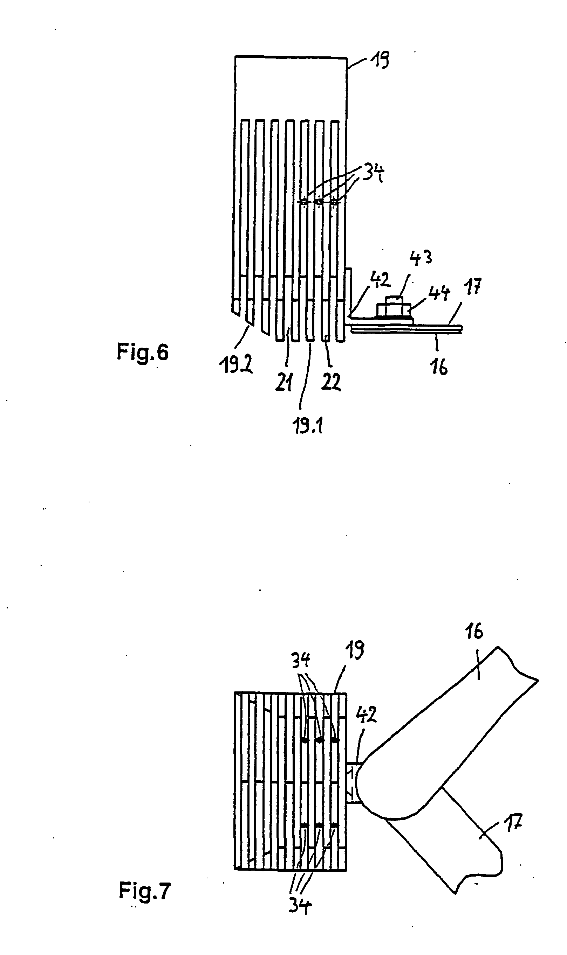

An die dem Auslasskopf 13 zugewandten Seiten der Segmente 19 sind am unteren, überlappungsfreien Bereich 46 (siehe Fig. 3) Haltewinkel 42 angeschraubt, die der gelenkigen Befestigung der Bänderlagen 16, 17 an den Segmenten 19 dienen, wie in den Fig. 6 und 7 dargestellt. Dazu sind die den Segmenten 19 zugewandten Enden der inneren Bänderlage 16 mit einem Schweißbolzen 43 versehen, der durch Bohrungen in der äußeren Bänderlage 17 und dem Haltewinkel 42 hindurch gesteckt und mit einer Mutter 44 lose verschraubt wird. Die Haltewinkel 42 sind so an den Segmenten 19 angeordnet, dass sich zwischen der inneren Bänderlage 16 und den Stirnseiten 19.1 der Segmente 19 - wenn überhaupt - nur eine geringe radiale Stufe ergibt.

Die beschriebene Kalibrierhülse 10 ist über einen großen Durchmesserbereich stufenlos verstellbar und gestattet einen Dimensionswechsel der zu produzierenden Kunststoffrohre 6 bei laufender Produktion. Bei einer Durchmesseränderung erfolgt gleichzeitig ein Antrieb der Spindeleinheiten 14 und der Stirnräder 38 in den Getriebekästen 37, d. h., die Segmente 19 und die Bänderlagen 16, 17 werden koordiniert und gleichzeitig verstellt. Dadurch ergibt sich am Einlaufkopf 12 immer ein im Wesentlichen mit dem Innendurchmesser des durch die Bänderlagen 16, 17 gebildeten Hohlzylinders identischer Innendurchmesser. Die Segmente 19 liegen dabei mit ihren Stirnseiten 19.1 dichtend auf der Oberfläche des extrudierten Rohres 6 auf und sorgen so für eine Abdichtung des im Vakuumtank 9 herrschenden Unterdrucks gegenüber der Umgebung. Das über die Wasserkammern 29 und die Kanäle 31, 32 sowie die Wasserauslässe 34 in die Schlitze 21 der Segmente 19 geführte Druckwasser sorgt für eine intensive Kühlung des Einlaufkopfes 12 und die Ausbildung eines Schmierfilms zur Gleitkühlung des extrudierten Rohres 6 und verbessert die Abdichtung zum Vakuumtank 9.

Der Durchsatz und der Wasserdruck und damit der durch das Wasser auf das extrudierte Rohr 6 ausgeübte Druck kann in Abhängigkeit vom Kunststoff, der Rohrdimension und des Unterdrucks im Vakuumtank 9 eingestellt werden. Dabei sorgen die vier Wasserkammern 29 für eine gezielte selektive Druckaufbringung.

## Patentansprüche

1. Stufenlos einstellbare Kalibrierhülse für extrudierte Kunststoffrohre mit einem Einlaufkopf (12) und zwei Bänderlagen (16, 17), die sich nach Art eines Scherengitters kreuzen und an den Kreuzungspunkten gelenkig miteinander verbunden sind, wobei der Einlaufkopf (12) und die
Bänderlagen (16, 17) auf den Rohrdurchmesser einstellbar sind, **dadurch gekennzeichnet, dass** der Einlaufkopf (12) in einer Radialebene (20) angeordnete, auf den Umfang des zu kalibrierenden Kunststoffrohres (6) verteilte, radial verstellbare und sich überlappende Segmente (19) aufweist, die in ihren Überlappungsbereichen (23) Schlitze (21) aufweisen und verzahnend ineinandergreifen, und wobei die Stirnseiten (19.1) der Segmente (19) zur Anlage an das zu kalibrierende Kunststoffrohr (6) ausgebildet und die Bänderlagen (16, 17) bündig mit den Stirnseiten (19.1) gelenkig an den Segmenten (19) befestigt sind.

2. Kalibrierhülse nach Anspruch 1, **dadurch gekennzeichnet, dass** in die Schlitze (21) Druckwasserauslässe (34) münden.

3. Kalibrierhülse nach Anspruch 2, **dadurch gekennzeichnet, dass** die Druckwasserauslässe (34) nur in den in Extrusionsrichtung hinten liegenden Schlitzen (21) vorgesehen sind.

4. Kalibrierhülse nach Anspruch 2 oder 3, **dadurch gekennzeichnet, dass** die Druckwasserauslässe (34) über ein mit einer Druckwasserquelle in Verbindung stehendes Kanalsystem (31, 32) der Segmente (19) mit Wasser versorgt werden.

5. Kalibrierhülse nach einem der Ansprüche 2 bis 4, **dadurch gekennzeichnet, dass** die Segmente (19) gruppenweise an die Druckwasserquelle angeschlossen sind.

6. Kalibrierhülse nach einem der vorstehenden Ansprüche, **dadurch gekennzeichnet, dass** die Segmente (19) eine Einlaufschräge (19.2) aufweisen.

7. Kalibrierhülse nach einem der vorstehenden Ansprüche, **dadurch gekennzeichnet, dass** jedem Segment (19) zu seiner radialen Verstellung ein Getriebekasten (37) zugeordnet ist, und der Antrieb aller Getriebekästen (37) über einen Elektromotor (36) erfolgt.

8. Kalibrierhülse nach einem der vorstehenden Ansprüche, **dadurch gekennzeichnet, dass** die Bänderlagen (16, 17) über axial von den Segmenten (19) abragende Haltewinkeln (42) gelenkig mit den Segmenten (19) verbunden sind, wobei sich die Bänderlagen (16, 17) etwa bündig an die Stirnseiten (19.1) der Segmente (19) anschließen.

## Claims

1. Steplessly adjustable calibration sleeve for extruded plastic tubes with an inlet head (12) and two plies of belt (16, 17) which cross each other in a manner of a slidable lattice grate and are hinged together at the intersection points, wherein the inlet head (12) and the plies of belt (16, 17) are adjustable to the tube diameter, **characterized in that** the inlet head (12) comprises radially adjustable and overlapping segments (19) which are arranged in a radial plane (20) and are distributed along the circumference of the plastic tube (6) to be calibrated, and possess slots (21) in their overlapping regions (23) and intermesh with each other, and wherein the end faces (19.1) of the segments (19) are designed for contact with the plastic tube (6) to be calibrated and the plies of belt (16, 17) are attached pivotally to the segments (19) and flush with the end faces (19.1).

2. The calibration sleeve according to claim 1, **characterized in that** the slots (21) lead to pressurized water outlets (34).

3. The calibration sleeve according to claim 2, **characterized in that** the pressurized water outlets (34) are provided only in the slots (21) located behind, when seen along the extrusion direction.

4. The calibration sleeve according to claim 2 or 3, **characterized In that** the pressurized water outlets (34) are supplied with water over a channel system (31, 32) of the segments (18) connected with a source of pressurized water.

5. Calibration sleeve according to one of the claims 2 to 4, **characterized in that** the segments (19) are connected in groups to the source of pressurized water.

6. The calibration sleeve according to one of the preceding claims, **characterized in that** the segments (19) have a lead-in chamfer (19.2).

7. The calibration sleeve according to one of the preceding claims, **characterized in that** a gear box (37) is assigned to each segment (19) for its radial adjustment, and the drive of all gear boxes (37) is via an electric motor (36).

8. The calibration sleeve according to one of the preceding claims, **characterized in that** the plies of belt (16, 17) are pivotally connected to the segments (19) via brackets (42) axially projecting from the segments (19), wherein the plies of belt (16, 17) flush more or less with the end faces (19.1) of the segments (19).

## Revendications

1. Manchon de calibrage réglable en continu pour tuyaux extrudés en matériau synthétique avec une tête d'entrée (12) et deux couches de rubans (16, 17) qui se croisent comme un grillage à ciseaux et qui sont reliés entre eux de manière articulée au niveau des points de croisement, la tête d'entrée (12) et les couches de rubans (16, 17) étant réglables sur le diamètre du tuyau, **caractérisé en ce que** la tête d'entrée (12) présentant des segments (19) qui se chevauchent, qui sont réglables radialement, qui sont répartis sur la circonférence du tuyau en matériau synthétique (6) à calibrer et qui sont disposés à un niveau radial (20), lesdits segments présentant des fentes (21) dans leurs zones de chevauchement (23) et s'engrenant mutuellement par dentures, et moyennant quoi les faces frontales (19.1) des segments (19) sont formées pour être appuyées sur le tuyau en matériau synthétique (6) à calibrer, et les couches de rubans (16, 17) sont fixées de manière articulée aux segments (19) et en affleurement avec les faces frontales (19.1).

2. Manchon de calibrage selon la revendication 1, **caractérisé en ce que** des sorties d'eau sous pression (34) débouchent dans les fentes (21).

3. Manchon de calibrage selon la revendication 2, **caractérisé en ce que** les sorties d'eau sous pression (34) ne sont prévues que dans les fentes (21) situées à l'arrière dans le sens d'extrusion.

4. Manchon de calibrage selon la revendication 2 ou 3, **caractérisé en ce que** les sorties d'eau sous pression (34) sont alimentées en eau par un système de canaux (31, 32) des segments (19) connecté à une source d'eau sous pression.

5. Manchon de calibrage selon l'une quelconque des revendications 2 à 4, **caractérisé en ce que** les segments (19) sont raccordés en groupes à la source d'eau sous pression.

6. Manchon de calibrage selon l'une quelconque des revendications précédentes, **caractérisé en ce que** les segments (19) présentent une inclinaison d'entrée (19.2).

7. Manchon de calibrage selon l'une quelconque des revendications précédentes, **caractérisé en ce qu'**une boîte d'engrenages (37) est associée à chaque segment (19) pour son déplacement radial, et **en ce que** l'entraînement de toutes les boîtes d'engrenages (37) est réalisé par un moteur électrique (36).

8. Manchon de calibrage selon l'une quelconque des revendications précédentes, **caractérisé en ce que** les couches de rubans (16, 17) sont reliées de manière articulée aux segments (19) par des équerres de maintien (42) qui dépassent axialement des segments (19), les couches de rubans (16, 17) se raccordant par exemple en affleurement aux faces frontales (19.1) des segments (19).
